Europäisches Patentamt

**European Patent Office**

Office européen des brevets

(11) Publication number: **0 074 092**
**B1**

# (12) EUROPEAN PATENT SPECIFICATION

(45) Date of publication of patent specification: **29.04.87**

(51) Int. Cl.⁴: **B 64 D 11/04**

(21) Application number: **82108106.4**

(22) Date of filing: **02.09.82**

(54) **Method of fabricating an airline galley.**

(30) Priority: **08.09.81 US 299736**

(43) Date of publication of application:
**16.03.83 Bulletin 83/11**

(45) Publication of the grant of the patent:
**29.04.87 Bulletin 87/18**

(84) Designated Contracting States:
**BE CH DE FR GB IT LI NL SE**

(56) References cited:
**GB-A-2 035 057**
**US-A-3 517 899**

**TECHNISCHE RUNDSCHAU, vol. 63, no. 51, 3rd December 1971, page 31; "Bordküchen für die Boeing 747"**

**ABC Naturwissenschaft und Technik 2, Edition Leipzig, DDR, 1980, page 1064, Keyword "Sandwichbauweise, Verbandplattenbauweise"**

(73) Proprietor: **Nordskog, Robert A.**
**18135 Karen Drive**
**Tarzana California (US)**

(72) Inventor: **Nordskog, Robert A.**
**18135 Karen Drive**
**Tarzana California (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Technical Field

The present invention relates to the fabrication of an airline galley.

### Background of the Prior Art

Vehicular interior building structures particularly those used in large aircraft, have traditionally been constructed of heavy duty, durable metals, such as steel, reinforced aluminium and the like, alone or in combination with relatively heavy plastics such as fiberglass and the like. For example, airline galleys for the past 25 years have been constructed primarily of high tensile strength aluminium alloys coupled with stainless steel and relatively rigid heavy plastics. Due to the tremendous recent increase in the cost of vehicular fuel, such as jet fuel, the weight of all vehicular components is being carefully scrutinized. Airlines are losing money and certain flights are being curtailed. Weight reductions of interior aircraft constructions and the like must now be made in order to reduce the consumption of jet fuel sufficiently and/or allow a sufficient increase in passenger and cargo loading to make commercial flights profitable once more. Basically the same problem faces the passenger car, bus and truck industry. The cost of fuel has necessitated a drastic reduction in vehicular body shell weight. Further reductions are needed and must come in part from the use of lighter, stronger interior constructions which are thermally and acoustically insulative and are flame retardant.

Accordingly, there is a need for an improved method of inexpensive vehicular interior building construction which has superior strength, adaptability, flame resistance, thermal and acoustical properties and which is substantially lighter in weight than conventional constructions.

It is known (see "ABC Naturwissenschaft und Technik 2" Edition Leipzig, DDR, 1980, page 1064 keyword "Sandwichbauweise, Verbundplattenbauweise"), to use a sandwich consisting of a pair of relatively strong outer layers separated by a light-weight filling, for example a plastic foam. Such material is disclosed as having application in the construction of aircraft. Properties of the material include good thermal insulation properties and sound damping as well as being very light.

Turning away from the field of materials and to the known methods of constructing modular furniture, document GB—A—2035057 discloses a system for the construction and assembly of L-shaped composable furniture. In this document a modular L-shaped piece of furniture is constructed of six side/top panels secured to an L-shaped rear wall. The six panels before assembly consist of one long strip with V-shaped channels at positions that will correspond to the inside corners of the item of furniture when it is assembled. Assembly of the item simply involves bending the strip to close the V-channels. The assembly becomes rigid when the rear wall is glued in place.

According to the invention, however, there is provided a method of fabricating a unitary, lightweight, high strength flame retardant, thermally and acoustically insulative plastic airline galley, the method comprising: providing a plurality of panels, each comprising a core sheet of rigid, expanded lightweight plastic, the plastic having a closed cellular structure, high flame resistance and low thermal conductivity, and self-supporting outer sheets of high tensile strength, lightweight fibrous plastic on opposite sides of the core sheet to form a laminate composite, the outer sheet being heat resistant, flame retardant and flexible; and interconnecting the panels to form the desired structure for the airline galley, characterized in that the method includes the steps of

a. making interconnections between panels by forming a recess in the core and one outer sheet only of one panel, applying excess adhesive to the sides of the recess and the mating surface of another panel, inserting the other panel into the recess and removing excess adhesive squeezed from the recess so that the joint includes a rounded fillet of adhesive, and a smooth continuous inner surface;

b. making rounded outside corners by removing a wedge of the core sheet and a portion of one outer sheet adjacent the wedge, applying adhesive to the surface of the wedge and bending the panel until opposed surfaces of the wedge meet, and thereafter removing excess adhesive so that the joint includes a rounded fillet of adhesive and has a smooth continuous surface.

Since an airline galley is a food preparation area, it is highly desirable to have a unit which is easy to clean and prevents the accumulation of dirt, vermin and decaying food particles in small cracks and recesses of the unit. Moreover, the weight of the galley is of prime consideration and should be strong and able to withstand vibrations during the transportation thereof. The method of the present invention provides for the fabrication of a galley having the desirable features outlined above.

According to the invention there is also provided a unitary, lightweight, high strength, flame retardant, thermally and acoustically insulated plastic airline galley, manufactured in accordance with the method outlined above.

### Drawings of the Invention

FIGURE 1 is a schematic perspective view of a portion of an airline galley;

FIGURE 2 is an enlarged fragmentary cross section of the interconnected ends of horizontal and vertical panels of the construction of FIGURE 1;

FIGURE 3 is an enlarged fragmentary cross section of the interconnected ends of horizontal and vertical panels of the construction of FIGURE 1 employing an exterior reinforcement of flexible bonded plastic cloth;

FIGURE 4 is a schematic fragmentary cross section of interconnected horizontal and diagonal panels of the construction of FIGURE 1 reinforced with flexible bonded plastic cloth;

FIGURE 5 is a schematic fragmentary cross section of interconnected vertical, horizontal and diagonal panels of the construction of FIGURE 1;

FIGURE 6 is a schematic fragmentary cross section of interconnected horizontal and diagonal shelving panels of the construction of FIGURE 1;

FIGURE 7 is a schematic fragmentary cross section of interconnected horizontal and vertical shelving panels of the construction of FIGURE 1;

FIGURE 8 is a schematic fragmentary cross section of interconnected horizontal and vertical partition panels of the construction of FIGURE 1; and

FIGURE 9 is a schematic fragmentary cross section of interconnected base and sidewall panels employing end caps and pins;

FIGURE 10 is a schematic fragmentary cross section of a panel with a notched portion;

FIGURE 10(a) shows the panel of FIGURE 10 after being bent over, forming a rounded outside corner.

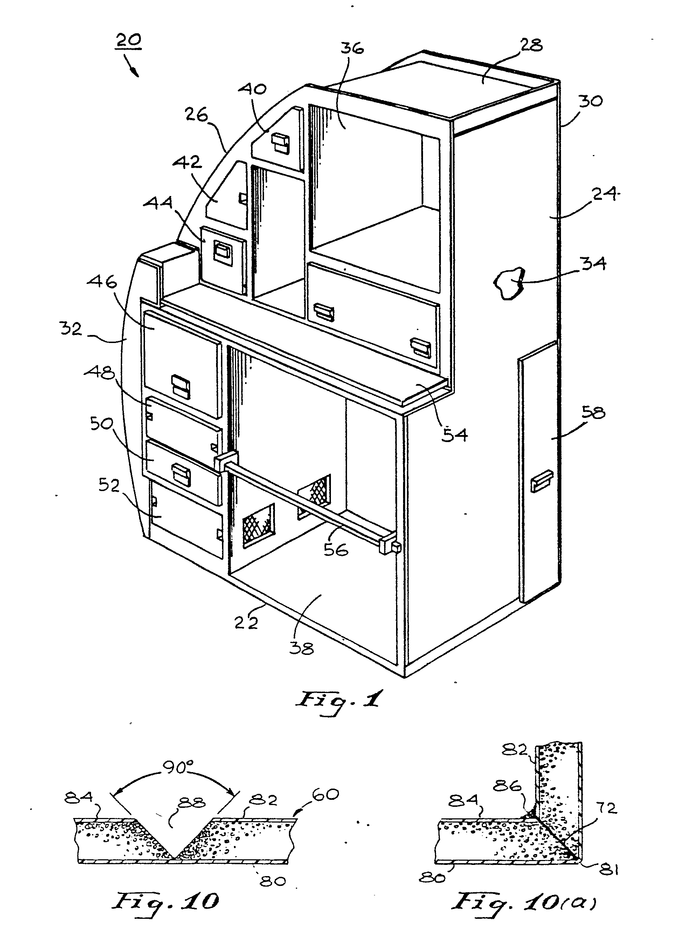

Detailed Description of the Drawings
*FIGURE 1*
Now referring more particularly to FIGURE 1 of the accompanying drawings, an improved light weight vehicular interior building construction by a method embodying the present invention is schematically depicted therein. Thus, an airline galley unit 20 is shown which includes interconnected components comprising a horizontal base 22, upstanding sidewalls 24 and 26, a horizontal top 28, a vertical back 30, and a specially configured generally vertical front 32, defining therebetween an enclosed central interior space 34.

As can be seen from FIGURE 1, wall 26 is curved to conform to aircraft interior bulkhead design and/or appearance requirements. Moreover, galley unit 20 includes a plurality of internal panels (not shown) which divide up space 34 to form a number of compartments, for example top compartment 36 and bottom compartment 38, both of which are open at front 32 and are adapted to receive, for example, respectively, a heating range and an aisle serving cart (not shown). Unit 20 can also include, for example, front opening compartments 40, 42, 44, 46, 48, 50 and 52, most of which include front door or drawer coverings. A horizontal counter or shelf 54 is also provided in Unit 20, as well as a cart retaining bar 56 or the like horizontal brace means, as shown in FIGURE 1, and an aisle side compartment access door 58.

*FIGURES 2—10(a)*
The components of galley unit 20 are formed of interconnected panels 60. Each panel 60 comprises a core 62 in the form of a flat sheet of closed cellular expanded plastic, such as that sold under the trademark Klegescell. Such sheet may be for example, about 16 mm—22 mm (.625 to .875 inch) thick, with a density of about 72 Kg/m³ (4.5 pounds per cubic foot). Other densities are also useful. Klegescell is the trademark of American Klegescell Corporation. It is made from a blend of plastic resins and exhibits good chemical resistance, is gas tight, vermin proof and waterproof. Moreover, it is extremely strong, light in weight and has superior stiffness, and thermal and acoustical insulativity. It is also substantially non-flammable and is compatible with other plastic compositions. Any other plastic which exhibits equivalently high thermal and acoustical insulative properties, light weight, structural strength, rigidity and flame resistance can also be used in place of or in addition to Klegescell.

In each panel 60 opposite sides 64 and 66 of core sheet 62 are abutted by flat self-supporting sheets 68 and 70 of selected aromid-type fibrous plastic material. Sheets 68 and 70 may, for example, have typical thickness as of about 0.4 mm (.016) to about 1.6 mm (.063 inch).

This plastic material has extremely high tensile strength of the order of five times that of a comparable weight of stainless steel, and much higher than fiberglass and is extremely light in weight, while being flexible, tough and resilient so as to be able to withstand shocks during use in aircraft and other vehicles. Moreover, plastic sheets 68 and 70 are heat resistant and flame retardant. Preferably, sheets 68 and 70 are of material sold under the trademark Kevlar. Kevlar is the registered U.S. trademark of E. I. DuPont de Nemours, Wilmington, Delaware. Any suitable aromid-type plastic or other plastic having these properties can be used in addition to or in place of Kevlar plastic for sheets 68 and 70.

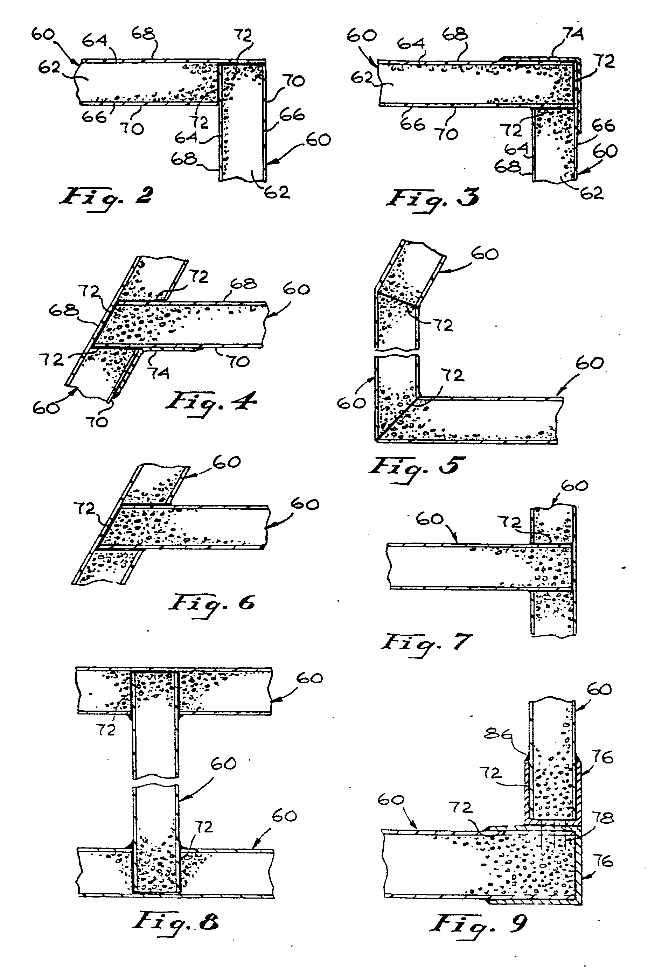

Unit 20 also includes means interconnecting panels 60 together to form the desired construction. FIGURES 2—10(a) demonstrate various interconnected panels 60 used in unit 20. Thus, FIGURES 2 and 3 show horizontal and vertical interconnected outside corner panels. FIGURE 4 illustrates interconnected horizontal and diagonal panels 60. FIGURE 5 illustrates interconnected outside corner horizontal, vertical and diagonal panels 60, and FIGURE 6 illustrates interconnected horizontal and diagonal shelving panels 60. FIGURE 7 illustrates interconnected horizontal and vertical shelving panels 60. FIGURE 8 illustrates interconnected horizontal and vertical panels 60 and FIGURE 9 illustrates interconnected base 22 panels 60 and sidewall 24 or 24 panels 60.

FIGURES 10 and 10(a) disclose a method of fabricating outside corner joints wherein the outside sheet 80 is left intact and continuous after a 90 degree wedge at 88 is formed in panel 60, with the panel then being folded over 90 degrees to form an outside corner 81. Adhesive layer 72 secures the respective portions of panel 60 together.

It should be noted that excess adhesive 72 is used in the joints. The excess adhesive forms a fillet as shown at 86 to provide additional structural integrity.

As shown in FIGURES 2 to 8 inclusive, the joined portions of interconnected panels 60 of unit 20 can be notched out in a manner so as to fit flush together. The areas of contact between such panels 60 are sealed together by layers 72 of adhesive, preferably of quick setting plastic bonding material compatible with core 62 and sheets 68 and 70. If desired, core 62 can be directly bonded to sheets 68 and 70, as by adhesive or thermal bonding, for example, at about 250 degrees for 30 minutes or can be air dryed for 24 hours or left unbonded all together, except at layers 72.

Other joining means can also be used to interconnect panels 60 in forming unit 20. Thus, FIGURES 3 and 4 show the use of flexible flame retardant plastic cloth strips 74 over the joints of adjoining panels 60 in addition to the adhesive 72. Preferably, strips 74 are also of Kevlar plastic or their equivalent and are thermally or adhesively bonded to panels 60, specifically to adjoining sheets 68 and/or 70. Strips 74 may be, for example, about 0.8 to 1.6 mm (.032 to .063 inches) thick.

FIGURE 9 shows the use of metal or plastic end caps 76, preferably of 6061T3 aluminum, on adjoining panels 60. Caps 76 preferably are about 1.6 mm to 2.3 mm (.063 to .090 inches) thick and are secured to panels 60 with adhesive layers 72, as shown in FIGURE 9, or can be thermally bonded thereto in the same manner as strips 74 or can otherwise be joined thereto. End caps 76 are also preferably connected together by one or more internal positioning blind fasteners, 78 of aluminum or the like and/or can be externally adhesively or otherwise bonded together, for example, with adhesive layer 72. This type of joint is defined hereby as of being of the cap and pin type.

FIGURES 2—9, illustrate the fact that unit 20 which may, for example, be one of two complementary (mirror image) units 20 formed on airliner galley or the like, can be easily, securely and conveniently fabricated of panels 60 interconnected as shown in FIGURES 2—9 to form a strong, light weight unitary construction. This construction represents substantial savings in fabrication and maintenance costs. Weight reductions of 25—40% from conventional constructions are obtained.

Various changes, modifications, alterations and additions can be made in the improved construction of the present invention and in the components and parameters thereof.

**Claims**

1. A method of fabricating a unitary, light-weight, high strength, flame retardant, thermally and acoustically insulative plastic airline galley (20), the method comprising: providing a plurality of panels (60), each comprising a core sheet (62) of rigid, expanded lightweight plastic, the plastic having a closed cellular structure, high flame resistance and low thermal conductivity, and self-supporting outer sheets (68, 70) of high tensile strength, lightweight fibrous plastic on opposite sides of the core sheet (62) to form a laminate composite, the outer sheet being heat resistant, flame retardant and flexible; and interconnecting the panels (60) to form the desired structure for the airline galley (20), characterized in that the method includes the steps of

a. making interconnections between panels (60) by forming a recess in the core and one outer sheet only of one panel, applying excess adhesive (72) to the sides of the recess and the mating surface of another panel, inserting the other panel into the recess and removing excess adhesive squeezed from the recess so that the joint includes a rounded fillet of adhesive, and a smooth continuous inner surface;

b. making rounded outside corners (81) by removing a wedge (88) of the core sheet (62) and a portion of one outer sheet adjacent the wedge, applying adhesive (72) to the surface of the wedge and bending the panel until opposed surfaces of the wedge meet, and thereafter removing excess adhesive so that the joint includes a rounded fillet (86) of adhesive (72) and has a smooth continuous surface.

2. A method according to claim 1 wherein the galley has a base panel (22) and upstanding wall panels (24) and the method also includes forming interconnections between the base panel (22) and the upstanding wall panels (24) of the end cap and pin type.

3. A method according to claim 1 or 2 wherein the core sheet (62) is 16 mm—22 mm (0.625 to 0.875 inches) thick with a density of 72 Kg/m³ (4.5 pounds per cubic foot).

4. A method according to claim 3 wherein the core sheet is of Klegescell (Registered Trade Mark).

5. A method according to any preceding claim wherein the outer sheet is of an aromid type fibrous plastics material such as Kevlar (Registered Trade Mark).

6. A method according to any preceding claim wherein the outer sheet is of thickness 0.4 mm to 1.6 mm (0.016 to 0.063 inches).

7. A method according to any preceding claim wherein the step of the making the interconnections includes applying a light-weight, heat resistant, flame retardant flexible plastic cloth to bridge adjoining panels.

8. A method according to claim 7 wherein said cloth comprises aromid-type plastics material such as Kevlar cloth.

9. A method according to any preceding claim wherein the material of the outer sheet has a tensile strength of the order of five times that of a comparable weight of stainless steel.

**Patentansprüche**

1. Verfahren zum Herstellen einer einheitlichen, leichten, flammenhemmenden, wärme- und schallisolierenden Bordküchenkonstruktion (20) von hoher Festigkeit für Linienflugzeuge, in dem eine Mehrzahl von Plattenkörpern (60) hergestellt werden, von denen jeder eine Kernplatte (62) besitzt, die aus starrem, geschäumtem, geschlossenzelligem Leichtkunststoff mit hoher Flammenbeständigkeit und niedriger Wärmeleitfähigkeit besteht, und auf entgegengesetzten Seiten der Kernplatte (62) vorgesehene, freitragende Deckblätter (68, 70) aus einem Harzfasermaterial von hoher Zugfestigkeit, so daß der Plattenkörper aus einem Verbundschichtstoff besteht, wobei das Deckblatt hitzebeständig, flammenhemmend und flexibel ist, und die Plattenkörper (60) zur Herstellung der gewünschten Bordküchenkonstruktion (20) für Linienflugzeuge miteinander verbunden werden, gekennzeichnet durch folgende Schritte:

a. Zum Herstellen von Verbindungen zwischen Plattenkörpern (60) wird in der Kernplatte und in nur einem Deckblatt eines Plattenkörpers eine Vertiefung ausgebildet; auf die Seitenflächen dieser Vertiefung und auf die Gegenfläche eines anderen Plattenkörpers wird Klebstoff (72) im Überschuß aufgetragen; dieser andere Plattenkörper wird in die Vertiefung eingesetzt, und aus der Vertiefung herausgequetschter, überschüssiger Klebstoff wird entfernt, so daß an der Verbindung eine gerundete Hohlkehle aus Klebstoff und eine glatte, kontinuierliche Innenfläche vorhanden sind;

b. zum Ausbilden von gerundeten äußeren Ecken (81) werden ein keilförmiger Teil (88) der Kernplatte (62) und ein Teil eines Deckblattes im Bereich des keilförmigen Teils entfernt; auf die Oberfläche des keilförmigen Teils wird Klebstoff (72) aufgetragen; der Plattenkörper wird gebogen, bis sich einander entgegengesetzte Oberflächen des keilförmigen Teils berühren, und danach wird überschüssiger Klebstoff entfernt, so daß an der Verbindung eine gerundete Hohlkehle (86) aus Klebstoff (72) und eine glatte, kontinuierliche Oberfläche vorhanden sind.

2. Verfahren nach Anspruch 1 zum Herstellen einer Bordküche, die einen Grundplattenkörper (22) und aufwärtsgerichtete Wandplattenkörper (24) besitzt, dadurch gekennzeichnet, daß zwischen dem Grundplattenkörper (22) und den aufwärtsgerichteten Wandplattenkörpern (24) Verbindungen mit einer Endkappe und einem Zapfen hergestellt werden.

3. Verfahren nach Anspruch 1 oder 2, dadurch gekennzeichnet, daß die Kernplatte (62) eine Stärke von 16 bis 22 mm und eine Dichte von 72 kg/m$^3$ hat.

4. Verfahren nach Anspruch 3, dadurch gekennzeichnet, daß die Kernplatte aus Klegescell (eingetragenes Warenzeichen) besteht.

5. Verfahren nach einem der vorhergehenden Ansprüche, dadurch gekennzeichnet, daß das Deckblatt aus einem aromidartigen Harzfasermaterial, beispielsweise aus Kevlar (eingetragenes Warenzeichen), besteht.

6. Verfahren nach einem der vorhergehenden Ansprüche, dadurch gekennzeichnet, daß das Deckblatt eine Stärke von 0,4 bis 1,6 mm hat.

7. Verfahren nach einem der vorhergehenden Ansprüche, dadurch gekennzeichnet, daß zum Herstellen der Verbindungen einanderstoßende Plattenkörper durch Anbringen eines leichten, hitzebeständigen, flammenhemmenden, flexiblen Tuches aus Harzfasermaterial überbrückt werden.

8. Verfahren nach Anspruch 7, dadurch gekennzeichnet, daß das Tuch aromedartiges Harz, beispielsweise Kevlartuch, enthält.

9. Verfahren nach einem der vorhergehenden Ansprüche, dadurch gekennzeichnet, daß das Material des Deckblattes eine Zugfestigkeit in der Größenordnung des fünffachen der Zugfestigkeit eines vergleichbaren Gewichts von nichtrostendem Stahl hat.

**Revendications**

1. Procédé pour fabriquer un meuble-office (20) d'un seul tenant, léger, ignifuge et isolant thermiquement et acoustiquement, en matière plastique, pour avion de ligne, procédé qui comprend la mise à disposition de panneaux (60) constitués chacun d'une feuille formant une âme (62) en plastique expansé rigide et léger, ayant une structure à cellules fermées, un haut effet retardateur de combustion et une faible conductivité thermique, et de feuilles extérieures autoporteuses (68, 70) en plastique fibreux léger de haute résistance à la traction, disposées sur les côtés opposés de l'âme (62) pour former avec celle-ci un matériau composite stratifié, la feuille extérieure étant résistante à la chaleur, ignifuge et flexible; et l'assemblage des panneaux (60) entre eux, de manière à former la structure désirée pour le meuble-office (20), caractérisé en ce que:

a. l'assemblage des panneaux (60) consiste à former une cavité dans l'âme et dans seulement une feuille extérieure d'un panneau, à appliquer de l'adhésif en excès (72) aux faces de la cavité et à la surface correspondante d'un autre panneau, à insérer cet autre panneau dans la cavité et à enlever l'adhésif excédentaire refoulé hors de la cavité, de manière que le joint ainsi réalisé comporte un cordon arrondi d'adhésif et une surface interne lisse et continue;

b. il comprend la formation d'angles extérieurs arrondis (81) par l'enlèvement d'un coin (88) de l'âme (62) et de la partie adjacente à ce coin d'une des feuilles extérieures, l'application d'adhésif (72) à la surface exposée par l'enlèvement du coin, le pliage du panneau, jusqu'à ce que les deux faces constituant cette surface se joignent, puis l'enlèvement d'adhésif excédentaire, de manière que le joint d'angle ainsi réalisé comporte un cordon arrondi (86) d'adhésif (72) et possède une surface lisse continue.

2. Procédé selon la revendication 1, dans lequel le meuble-office comporte un panneau de base (22) et des panneaux de paroi verticaux (24) et le procédé comprend également la réalisation de joints entre le panneau de base (22) et les panneaux de paroi verticaux (24) du type capot et tige.

3. Procédé selon la revendication 1 ou 2, dans lequel l'âme (62) possède une épaisseur de 16—22 mm et une densité massique apparente de 72 kg/m$^3$.

4. Procédé selon la revendication 3, dans lequel l'âme est en Klegescell (marque déposée).

5. Procédé selon l'une quelconque des revendications précédentes, dans lequel la feuille extérieure est faite d'une matière plastique fibreuse de type aromatique, telle que le Kevlar (marque déposée).

6. Procédé selon l'une quelconque des revendications précédentes, dans lequel la feuille extérieure possède une épaisseur de 0,4 à 1,6 mm.

7. Procédé selon l'une quelconque des revendications précédentes, dans lequel la réalisation des joints comprend l'application d'une étoffe de plastique souple, légère, résistante à la chaleur et à effet retardateur de combustion pour recouvrir l'intervalle ou le joint formé entre des panneaux voisins.

8. Procédé selon la revendication 7, dans lequel ladite étoffe est constituée par une matière plastique de type aromatique, telle qu'une étoffe en Kevlar.

9. Procédé selon l'une quelconque des revendications précédentes, dans lequel la matière constitutive de la feuille extérieure possède une résistance à la traction qui est de l'ordre du quintuple de celle d'une feuille de poids comparable en acier inoxydable.

*Fig. 1*

*Fig. 10*

*Fig. 10(a)*

1

Fig. 2

Fig. 3

Fig. 4

Fig. 5

Fig. 6

Fig. 7

Fig. 8

Fig. 9